Europäisches Patentamt

European Patent Office

Office européen des brevets

(11) Veröffentlichungsnummer: **0 233 316 B1**

(12) **EUROPÄISCHE PATENTSCHRIFT**

(45) Veröffentlichungstag der Patentschrift: **11.11.92**

(51) Int. Cl.⁵: **G01N 21/29**

(21) Anmeldenummer: **86113670.3**

(22) Anmeldetag: **03.10.86**

(54) **Kolorimeter.**

(30) Priorität: **18.02.86 DE 8604292 U**

(43) Veröffentlichungstag der Anmeldung:
**26.08.87 Patentblatt 87/35**

(45) Bekanntmachung des Hinweises auf die
Patenterteilung:
**11.11.92 Patentblatt 92/46**

(84) Benannte Vertragsstaaten:
**AT BE CH DE ES FR GB GR IT LI NL SE**

(56) Entgegenhaltungen:
**DE-C- 15 681**
**DE-C- 661 586**
**GB-A- 546 983**
**GB-A- 1 552 548**
**US-A- 2 009 943**

(73) Patentinhaber: **Tintometer GmbH**
**Westfalendamm 73**
**W-4600 Dortmund 1(DE)**

(72) Erfinder: **Voss, Cay-Peter**
**Alter Hohlweg 40**
**W-5800 Hagen 1(DE)**

(74) Vertreter: **Bunke, Holger, Dr.rer.nat.**
**Dipl.-Chem. et al**
**Patentanwälte Prinz, Leiser, Bunke & Partner**
**Manzingerweg 7**
**W-8000 München 60(DE)**

## Beschreibung

Die Erfindung betrifft ein Kolorimeter, insbesondere für die visuelle Bestimmung der Konzentration von in farbigen bzw. gefärbten Flüssigkeiten gelösten Bestandteilen, wobei das Kolorimeter mindestens zwei lichtdurchlässige Küvetten und unterschiedliche Farbtöne tragende Farbvergleichsfelder aufweist.

Bei der Kolorimetrie wird bekanntlich die Konzentration einer Lösung durch Farbvergleich mit einer Standardlösung derselben Substanz bestimmt. Zur Messung wird unzerlegtes weißes Licht verwendet, das sowohl durch eine Meßküvette als auch durch eine Vergleichsküvette hindurchtritt. Da nach dem Lambert-Beerschen Gesetz die durch eine farbige Lösung hindurchtretende Teilintensität des Lichts (Transparenz) von der Schichtdicke der absorbierenden Lösung und von der Konzentration des gelösten Stoffes abhängt, läßt sich bei konstanter Schichtdicke die Konzentration eines gelösten Stoffes durch einfachen Farbvergleich verhältnismäßig genau bestimmen. Zum Farbvergleich werden unterschiedliche Farbtöne tragende Farbvergleichsfelder verwendet, die anhand von Standardlösungen mit bekannter Konzentration ermittelt worden sind.

In Fällen, in denen die zu untersuchende Flüssigkeit vor der kolorimetrischen Bestimmung einer chemischen Reaktion unterzogen werden muß, in deren Verlauf sich die Flüssigkeit verfärbt, beispielsweise durch Umwandlung einer farblosen Leukoverbindung in den entsprechenden Farbstoff oder durch Komplexbildung, macht der Vergleich der Farbe der Reaktionslösung mit den bestimmten Standardlösungen entsprechenden Farbvergleichsfeldern Schwierigkeiten, sofern die zu untersuchende Flüssigkeit von Haus aus gefärbt ist oder ungelöste Teilchen, z.B. Schwebstoffteilchen enthält, welche die Transparenz bzw. die Extinktion (negativer Logarithmus der Transparenz) des hindurchtretenden Lichts ändern. Die Kombination der Eigenfarbe der zu untersuchenden Flüssigkeit und der durch chemisch-analytische Reaktion gebildeten Farbe führt beim Farbvergleich zu einer Verfälschung der tatsächlichen Verhältnisse. Aus diesem Grunde muß die Eigenfarbe der zu untersuchenden Flüssigkeit kompensiert werden.

Bei einem bekannten Kolorimeter wird die Kompensation der Eigenfarbe der zu untersuchenden Lösungen oder Flüssigkeiten dadurch erreicht, daß die Farbvergleichsfelder als Fenster einer Lochscheibe ausgebildet sind, die durch Drehen der Lochscheibe in den Strahlengang zwischen der Vergleichsküvette und dem Beobachtungsfenster im Gehäuse eingeschoben werden können. Auf diese Weise wird nicht mehr die Farbe des jeweiligen Fensters der Lochscheibe alleine mit der Farbe der zu untersuchenden Probe verglichen, sondern die aus der Farbe des Fensters der Lochscheibe und der Eigenfarbe der zu untersuchenden Flüssigkeit resultierende Farbe.

Dadurch wird eine Verfälschung des kolorimetrisch ermittelten Meßergebnisses weitgehendst ausgeschlossen.

Das bekannte Kolorimeter war jedoch wegen der drehbaren Lochscheibe ein relativ unhandliches, mechanisch bewegte und deshalb verschleißanfällige Teile enthaltendes, in der Herstellung teures Gerät.

Aus DE-A-661 586 ist ein Kolorimeter mit zwei kreiszylindrischen Glasröhren als lichtdurchlässigen Küvetten bekannt, welche in einem aufklappbaren Gehäuse untergebracht sind. In dem angelenkten Deckel des Blechgehäuses sind zwei Reihen von Schauöffnungen integriert, von denen die eine Reihe mit farblosem Glas und die andere Reihe mit farbigen Gläsern (Farbvergleichsgläsern) verschlossen sind.

Aus GB-A-546 983 ist ein Kolorimeter bekannt, das eine Küvette mit drei parallelen Kammern und jeweils drei lichtdurchlässigen Fenstern aufweist, welche den Lichtdurchtritt und damit die kolorimetrische Beobachtung sowohl in Längsrichtung als auch in Querrichtung der Kammern gestatten, so daß dieselbe Probenlösung in unterschiedlicher Schichtdicke beobachtet werden kann. Vor beide Arten lichtdurchlässiger Öffnungen lassen sich Farbvergleichsgläser, einzelne, auswechselbare Gläser, einschieben, und zwar in den zwischen der Gehäusewand und der Küvettenoberfläche verbleibenden Luftspalt.

Aus GB-A-1 552 548 ist ein Kolorimeter mit zwei kreiszylindrischen Probengläsern bekannt, zwischen denen sich zwei unterschiedliche Reihen von Farbvergleichsfeldern befinden, die jedoch vom Strahlengang nicht erfaßt werden und die der gleichzeitigen Bestimmung der Konzentrationen zweier verschiedener Inhaltsstoffe dienen.

Der Erfindung liegt die Aufgabe zugrunde, ein einfacheres, billigeres, handlicheres Kolorimeter zu schaffen, das ebenfalls eine Vorrichtung zum Kompensieren der Eigenfarbe der zu untersuchenden Flüssigkeit aufweist, aber keine mechanisch bewegten, verschleißanfälligen Teile enthält.

Die Aufgabe wird bei einem Kolorimeter der eingangs genannten Gattung erfindungsgemäß dadurch gelöst, daß die Küvetten durch Kammern eines einstückigen Körpers aus lichtdurchlässigem Material gebildet sind und daß die Farbvergleichsfelder durch entsprechend getönte, lichtdurchlässige Fenster in einer Außenwand einer Küvette gebildet sind.

Da die Küvetten immer aus lichtdurchlässigem Material, z.B. Glas oder Kunststoff, hergestellt sein müssen, stellt die erfindungsgemäße Lehre eine überraschend einfache Lösung des oben beschriebenen Problems der Kompensation der Eigenfarbe gefärbter Lösungen oder Flüssigkeiten dar. Es genügt nämlich, die Farbvergleichsfelder einfach in eine Außenwand einer der mindestens zwei Küvetten "einzubauen". Es handelt sich dabei um entsprechend getönte lichtdurchlässige Flächen oder "Fenster", die sich je nach der gewählten oder gewünschten Form der Küvette übereinander oder nebeneinander anordnen lassen. Auf einer Seite einer rechteckig ausgebildeten Küvette mit 10 ml Meßvolumen und einem Querschnitt von etwa 15 x 15 mm lassen sich etwa 5 bis 6 solcher Farbvergleichsfelder anordnen. Es steht jedoch im Belieben des Fachmannes, andere Küvettenmaße zu verwenden; so werden bei besonders hellen Lösungen mit geringer Farbintensität Küvetten von etwa 40 mm Seitenlänge benutzt.

Anstelle einzelner Fenster können die Farbvergleichsfelder auch in Form eines kontinuierlich verlaufenden Farbkeils in einer Außenwand der Küvette angeordnet sein.

Das durch die Rückwand und gegebenenfalls durch die Seitenwände der Küvette eintretende Licht tritt dann sowohl durch die gefärbte Flüssigkeit als auch durch die Farbvergleichsfelder hindurch, so daß der kolorimetrischen Messung automatisch nicht nur die Farbe der Standardlösungen bekannter Konzentration, d.h. die Farbe der Farbvergleichsfelder, sondern die Kombination der Eigenfarbe der zu untersuchenden Flüssigkeit mit der Farbe der Farbvergleichsfelder zugrunde gelegt wird. Dadurch wird der den Farbvergleich verfälschende Einfluß der Eigenfarbe der zu untersuchenden Flüssigkeit ausgeschaltet bzw. kompensiert.

Der einstückige Küvettenkörper besteht vorzugsweise aus Glas oder farblosem Kunststoff. Der Küvettenkörper ist besonders handlich und nicht größer als eine übliche Zigarettenschachtel.

Besonders vorteilhaft ist ferner eine Ausführungsform, bei der der einstückige Körper drei Kammern aufweist, nämlich zwei als Meßküvetten ausgebildete äußere Kammern und eine als Vergleichsküvette ausgebildete mittlere Kammer. Bei dieser Ausführungsform können zwei verschiedene kolorimetrische Bestimmungen gleichzeitig durchgeführt werden, wobei dann zwei verschiedene Reihen von Farbvergleichsfeldern, die auf die durchzuführenden Bestimmungen abgestimmt sind, Verwendung finden. Beispielsweise können so gleichzeitig der pH-Wert und ein Schwermetallwert, z.B. Kupfer, bestimmt werden. Als Farbindikatoren können alle hierfür bekannten Indikatoren verwendet werden, beispielsweise Phenolrot für den pH-Wert und ein Farbkomplexbildner für den Kupfer-Wert.

Obwohl dieses Ausführungsbeispiel des erfindungsgemäßen Kolorimeters zwei Meßküvetten aufweist, genügt es, nur eine einzige Vergleichküvette in Form einer mittleren, zwischen den beiden Meßküvetten angeordneten Kammer vorzusehen. Die Farbvergleichsfelder sind, auch wenn es sich um mehrere Serien für verschiedene Bestimmungen handelt, zweckmäßig auf bzw. innerhalb derselben Seitenwand der als Vergleichsküvette ausgebildeten mittleren Kammer angeordnet. Die entsprechenden Seitenwände der Meßküvetten können vollflächig durchsichtig und glasklar sein, sie können aber auch auf der Beobachtungsseite einige glasklar-durchsichtige Fenster oder Flächenabschnitte aufweisen, die hinsichtlich ihrer Größe und Lage den Farbvergleichsfeldern der Vergleichsküvette entsprechen.

Bei einem weiteren vorteilhaften Ausführungsbeispiel des erfindungsgemäßen Kolorimeters ist die "Rückwand", d.h. die den Farbvergleichsfeldern gegenüberliegende Wand, auf ihrer Außenseite mit einer für Licht im sichtbaren Bereich durchlässigen, blendungs- und spiegelfreien Beschichtung versehen. Diese Beschichtung führt zu einer gleichmäßig diffusen Belichtung und damit zu einer über den gesamten Querschnitt der Küvetten gleichmäßigen Transparenz.

Vorzugsweise sind die Küvetten mit einem abnehmbaren flüssigkeitsdichten Deckel verschließbar. Es kann sich hierbei um einen separaten Deckel für jede einzelne Küvette handeln, aber auch um einen Deckel, der gleichzeitig sämtliche Küvetten flüssigkeitsdicht verschließt.

Ein Ausführungsbeispiel des erfindungsgemäßen Kolorimeters wird nachstehend anhand der Zeichnung weiter erläutert:

Fig. 1     ist eine Ansicht einer Ausführungsform eines erfindungsgemäßen Kolorimeters mit zwei Küvetten;

Fig. 2     ist eine Ansicht einer Ausführungsform des erfindungsgemäßen Kolorimeters mit drei Küvetten.

Das Kolorimeter 1 besteht aus einem lichtdurchlässigen einstückigen Körper aus farblosem Glas oder Kunststoff mit einer als Meßküvette ausgebildeten Kammer 2 und einer als Vergleichsküvette ausgebildeten Kammer 3. Die nach oben offenen Kammern 2, 3 sind mittels eines flüssigkeitsdichten Deckels (nicht gezeichnet) verschließbar.

Während die Wand 6 der Meßküvette 2 glasklar und durchsichtig ist, ist die Wand 7 durch Auftragen eines Lacks oder einer Folie auf das lichtdurchlässige Material undurchsichtig gemacht, mit Ausnahme der Farbvergleichsfelder 8, die als Fenster bzw. als nicht lackierte oder mit Folie abgedeckte Bereiche der Wand 7 ausgebildet sind. Die Fenster 8 sind unterschiedlich gefärbt, aber dennoch lichtdurchlässig.

Die Farbe der zu untersuchenden Probe, die in die Meßküvette 2 eingefüllt wird und die durch die glasklare durchsichtige Wand 6 beobachtet werden kann, wird nun mit der unterschiedlichen Konzentrationen eines bestimmten Inhaltsstoffes entsprechenden Farbe der Farbvergleichsfelder 8 verglichen, wobei sich die visuell wahrnehmbare Farbe der Farbvergleichsfelder 8 aus deren ursprünglicher Farbe und der Eigenfarbe der in die Vergleichsküvette 3 eingefüllten Vergleichsprobe zusammensetzt.

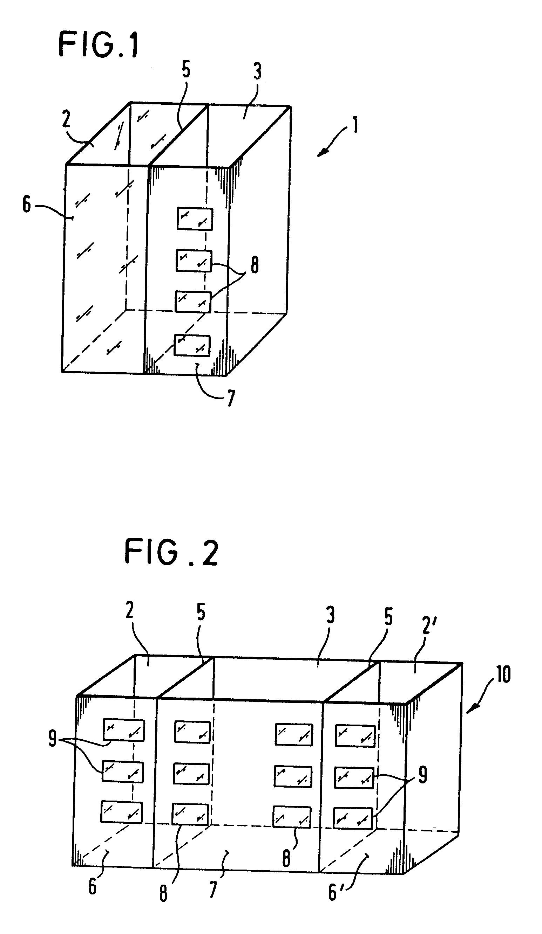

Die in Fig. 2 wiedergegebene Ausführungsform des erfindungsgemäßen Kolorimeters 10 unterscheidet sich von der Ausführungsform gemäß Fig. 1 dadurch, daß der einstückige Körper aus farblosem Glas oder Kunststoff mittels zweier Trennwände 5 in drei Kammern 2, 2', 3 unterteilt ist, wobei die beiden äußeren Kammern 2, 2' als Meßküvetten ausgebildet sind, während die mittlere Kammer 3 als Vergleichsküvette ausgebildet ist. Bei dieser Ausführungsform sind alle Vorderwände 6, 6', 7 der drei Kammern 2, 2', 3 mit Ausnahme der Fenster 8, 9 durch Abdecken der Oberfläche mittels einer Lackschicht oder einer Folie undurchsichtig gemacht. Lediglich die Fenster 8, 9 sind lichtdurchlässig. Die Fenster 8 der mittleren Kammer 3 sind farbig getönt und dienen als Farbvergleichsfelder, während die Fenster 9 der Meßküvetten 2, 2' glasklar und durchsichtig sind und der Beobachtung der Farbe der zu bestimmenden Proben dienen.

Da das Kolorimeter 10 zwei Meßküvetten 2, 2' enthält, können hier zwei verschiedene Messungen bei einer bestimmten gefärbten Flüssigkeit, z.B. Abwasser, gleichzeitig durchgeführt werden, beispielsweise kann in der einen Meßkammer 2 der pH-Wert durch Zusatz von Phenolrot und in der zweiten Meßküvette 2' der Kupfergehalt mittels eines komplexbildenden Salzes bestimmt werden. Die unbehandelte Probe der zu untersuchenden Flüssigkeit wird in die Vergleichsküvette 3 eingefüllt und dient für beide, gleichzeitig durchzuführenden Messungen als Referenzlösung.

Auch die nach oben offenen Kammern 2, 2', 3 des Kolorimeters 10 sind mit Hilfe eines (nicht gezeichneten) flüssigkeitsdichten Deckels verschließbar.

## Patentansprüche

1. Kolorimeter mit mindestens zwei lichtdurchlässigen Küvetten und mit unterschiedliche Farbtöne tragenden Farbvergleichsfeldern, dadurch gekennzeichnet, daß die Küvetten durch Kammern (2, 2', 3) eines einstückigen Körpers aus lichtdurchlässigem Material gebildet sind und daß die Farbvergleichsfelder durch entsprechend getönte, lichtdurchlässige Fenster (8) in einer Außenwand (7) einer Küvette gebildet sind.

2. Kolorimeter mit mindestens zwei lichtdurchlässigen Küvetten und mit unterschiedliche Farbtöne tragenden Farbvergleichsfeldern, dadurch gekennzeichnet, daß die Küvetten durch Kammern (2, 2', 3) eines einstückigen Körpers aus lichtdurchlässigem Material gebildet sind und daß die Farbvergleichsfelder in Form eines kontinuierlich verlaufenden, lichtdurchlässige Farbkeils in einer Außenwand (7) einer Küvette gebildet sind.

3. Kolorimeter nach Anspruch 1 oder 2, gekennzeichnet durch zwei als Meßküvetten ausgebildete äußere Kammern (2, 2') und eine als Vergleichsküvette ausgebildete mittlere Kammer (3).

4. Kolorimeter nach Anspruch 3, dadurch gekennzeichnet, daß die Farbvergleichsfelder in einer Außenwand (7) der als Vergleichsküvette ausgebildeten Kammer (3) angeordnet sind.

5. Kolorimeter nach einem der Ansprüche 1 bis 4, dadurch gekennzeichnet, daß die den Farbvergleichsfeldern gegenüberliegende Wand auf ihrer Außenseite mit einer für Licht im sichtbaren Bereich durchlässigen, blendungs- und spiegelfreien Beschichtung versehen ist.

6. Kolorimeter nach einem der Ansprüche 1 bis 5, dadurch gekennzeichnet, daß die Küvetten mit einem abnehmbaren flüssigkeitsdichten Deckel verschließbar sind.

## Claims

1. Colorimeter having at least two light-transmitting cells and having colour comparison fields carrying different tones, characterised in that the cells are formed by chambers (2, 2', 3) of a one-piece body made from light-transmitting material, and that the colour comparison fields are formed by appropriately tinted, light-transmitting windows (8) in an outer wall (7) of a cell.

2. Colorimeter having at least two light-transmitting cells and having colour comparison fields carrying different tones, characterised in that the cells are formed by chambers (2, 2', 3) of a one-piece body made from light-transmitting material, and that the colour comparison fields are formed in an outer wall (7) of a cell as a continuously extending, light-transmitting colour wedge.

3. Colorimeter according to Claim 1 or 2, characterised by two outer chambers (2, 2') constructed as test cells, and by a central chamber (3) constructed as a reference cell.

4. Colorimeter according to Claim 3, characterised in that the colour comparison fields are arranged in an outer wall (7) of the chamber (3) constructed as a reference cell.

5. Colorimeter according to one of Claims 1 to 4, characterised in that the wall opposite the colour comparison fields is provided on its outside with a coating which is transparent, antidazzle and antiglare with regard to light in the visible range.

6. Colorimeter according to one of Claims 1 to 5, characterised in that the cells can be sealed by means of a removable liquid-tight cover.

**Revendications**

1. Colorimètre comportant au moins deux cuvettes translucides et des zones de comparaison de teintes présentant des teintes différentes, caractérisé en ce que les cuvettes sont constituées par des chambres (2, 2', 3) d'un corps d'un seul tenant en matériau translucide et en ce que les zones de comparaison de teintes sont constituées par des fenêtres translucides (8), teintées de manière appropriée, ménagées dans la paroi extérieure (7) d'une cuvette.

2. Colorimètre comportant au moins deux cuvettes translucides et des zones de comparaison de teintes présentant des teintes différentes, caractérisé en ce que les cuvettes sont constituées par des chambres (2, 2', 3) d'un corps d'un seul tenant en matériau translucide et en ce que les zones de comparaison de teintes sont réalisées sous la forme d'un coin teinté translucide, s'étendant de manière continue dans la paroi extérieure (7) d'une cuvette.

3. Colorimètre conforme à l'une des revendications 1 ou 2, caractérisé par deux chambres extérieures (2, 2') conformées pour servir de cuvettes de mesure et une chambre intermédiaire (3) conformée pour servir de cuvette de comparaison.

4. Colorimètre conforme à la revendication 3, caractérisé en ce que les zones de comparaison de teintes sont ménagées dans la paroi extérieure (7) de la chambre (3) conformée pour servir de cuvette de comparaison.

5. Colorimètre conforme à l'une des revendications 1 à 4, caractérisé en ce que la paroi opposée aux zones de comparaison de teintes est couverte sur sa face extérieure d'un revêtement perméable à la lumière du champ visible, antiéblouissant et antireflets.

6. Colorimètre conforme à l'une des revendications 1 à 5' caractérisé en ce que les cuvettes peuvent être fermées à l'aide d'un couvercle amovible, étanche aux fluides.

FIG.1

FIG.2